# EUROPEAN PATENT APPLICATION

(11) **EP 1 059 746 A2**
(43) Date of publication of application: **13.12.2000**
(21) Application number: 00810494.5
(22) Date of filing: 07.06.2000
(51) Int. Cl.: H04B 10/17, H04B 10/08, H01S 3/067

(54) **Optical amplifier with monitor tap using a four-port coupler**

(30) Priority: 09.06.1999 US 328428
(71) Applicant: JDS Uniphase Inc., Nepean, Ontario K2G 5W8 (CA)
(72) Inventor: Zimmerman, Donald, Farmingdale N.J. 07727 (US); Nyman, Bruce, Freehold N.J. 07728 (US)
(74) Representative: Frei, Alexandra Sarah

(57) **Abstract**

An optical amplifier for amplifying an optical signal is disclosed wherein a four port coupler provides multi-functionality. A pump light source is coupled to a first port, a transmission signal to be amplified is coupled to a second port, a multiplexed signal is received on the third port and a monitor signal is provided on the fourth port for monitoring one of the pump or transmission signal. Conveniently a detector is optically coupled with the fourth port to provide a feedback signal.

## Description

### Field of the Invention

This invention relates in general to optical amplifiers, and more particularly to an optical amplifier configuration having a feedback system for monitoring a pump signal and in a particular embodiment for maintaining a substantially constant amplified output.

### Background of the Invention

Improvements in optical amplifiers have vastly enhanced the use of optical communication systems by increasing both data rates and the distances over which optical signals are transmitted. One significant advancement in such amplifiers is the development of optical amplifiers based on an optical fiber doped with a rare-earth element. This type of amplifier eliminates the need for complicated regenerator or "repeater" devices used in conventional systems to regenerate attenuated signals. Conventional repeaters require complex electronics to convert light into electric signals, amplify the signal, recover the data from the amplified signal, and then transform it back into light. In contrast, doped-fiber optical amplifiers do not interrupt the light signal, but merely add energy to it. The components in the optical amplifier system are comparatively simple.

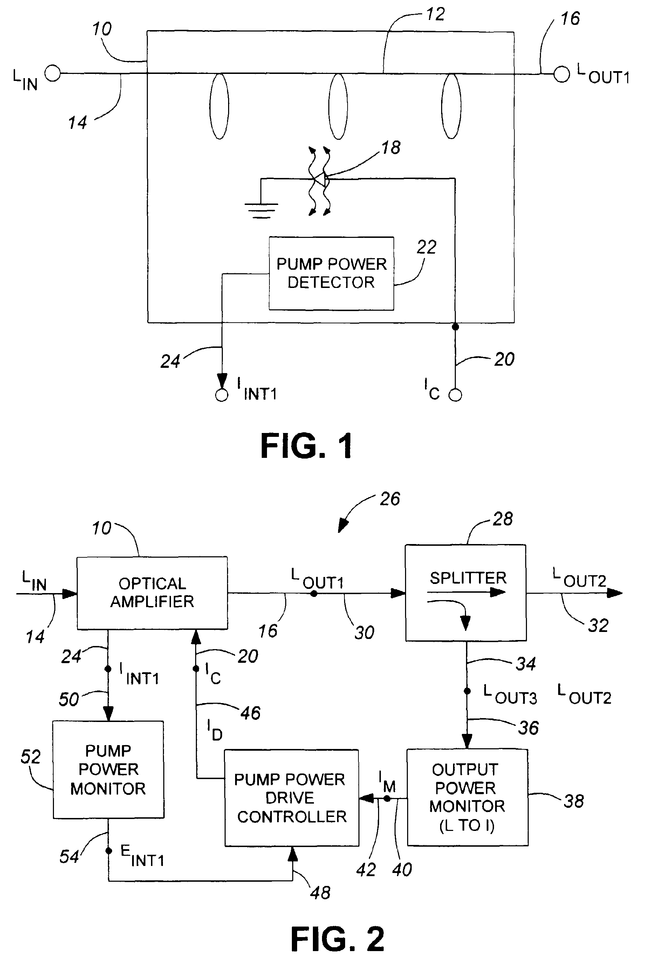

FIG. 1 illustrates a block diagram of a prior art optical amplifier designated generally at 10. The block diagram is a simplified illustration of commercially available amplifiers, such as the FiberGain.TM., Module available from Corning Incorporated of Corning, N.Y., and identified as part number CL-10. Amplifier 10 includes an optical fiber 12 which is doped with a rare-earth element. In the preferred embodiment, the dopant is erbium. Other elements, such as neodymium, also have been used as dopants for the fiber, but erbium remains as the most prominent and successful. Optical fiber 12 provides an input 14 for receiving a light input signal, L_{IN}, and an output 16 for providing an amplified light output signal, L_{OUT1}.

Amplifier 10 further includes a light sourcing device which is typically a laser diode 18. The diode 18 couples power to the amplifier by "pumping" energy into optical fiber 12 and, hence, is also known as a pump laser diode. Specifically, the light provided by laser diode 18 is absorbed by the erbium atoms in fiber 12, pumping those atoms to a high-energy level. When a weakened L_{IN} signal enters fiber 12, the excited erbium atoms transfer their energy to the signal in a process known as stimulated emission. As a result, the fiber 12 provides the amplified light output signal, L_{OUT1}. The anode of laser diode 18 provides an input 20 for receiving an amplification control current, I_{c}. For ease of illustration, the cathode of laser diode 18 is shown as grounded. It should be understood, however, that alternative configurations may be implemented for activating and deactivating laser diode 18.

Amplifier 10 also includes a pump power detector 22, which is typically a photodiode. Power detector 22 is proximate the sourcing laser diode 18 and, hence, provides an electrical signal, I_{INT1}, directly proportional to the light intensity L_{PLD} of pump laser diode 18. Signal I_{INT1}, is detectable at output 24 of amplifier 10. In commercially available amplifiers, power detector 22 is often referred to as a "rear facet detector" due to its physical relationship to laser diode 18. Specifically, a small portion of the light emitted by laser diode 18 is reflected "rearwardly" to the detector, thereby giving the detector its name. As known in the art, the photodiode converts the light to an electrical signal (i.e., I_{INT1}) indicative of the intensity of the detected light.

While amplifier 10 of FIG. 1 provides numerous advantages over repeaters, developmental efforts continue in an attempt to increase optical system performance, including device reliability. For example, it is known in the art to include a feedback circuit which adjusts Ic to maintain a constant light output signal, L_{OUT1}. Thus, as L_{IN} changes in intensity or wavelength, I_{c} is altered to maintain L_{OUT}, at a fixed level. When L_{IN} falls below a certain level, or is removed completely, the feedback system would try to greatly increase the magnitude of I_{c}. However, above a certain level of optical output power, diode 18 will be damaged. Therefore, such a system will include a current limit for I_{c}, limiting it to a value that does not produce a damaging level of optical output power. As diode 18 ages, its efficiency decreases, producing a lower level of optical output for a given I_{c}. This reduces the amplifier performance and reduces its useful lifetime.

U.S. Patent 5,374,973 incorporated herein by reference attempts to provide an improvement over the amplifying circuit of Fig. 1. As can be seen from FIG. 2, Configuration 26 includes the prior art optical amplifier 10, and its associated components, described in connection with FIG. 1, above. An optical splitter 28 is connected to output 16 to receive the amplified light output signal, L_{OUT1}, at its input 30. Optical splitter 28 passes a majority of the light signal to its first output 32 to provide a first light output signal, L_{OUT2}. Signal L_{OUT2} is the amplified output signal for configuration 26 and, hence, is communicated to the desired destination of the system (e.g., along a fiber optic communication system). A small portion of L.sub.OUT1 is split from the remainder to provide a second light output signal, L_{OUT3} at a second output 34. Signal L_{OUT3} is, therefore, proportional to signal L_{OUT2}. In the preferred embodiment, L_{OUT2} represents approximately 99% of L_{OUT1} while L_{OUT3} represents the remaining 1% of L_{OUT1}.

Similarly, U.S. Patent No. 5,467,219 describes a control circuit for reducing the output of an optical amplifier when reflected light associated with the output of the amplifier temporarily increases. An erbium-added optical fiber amplifies an input optical signal. One disadvantage of this circuit and circuits of this type is that the splitter provided to tap some of the amplified signal is costly and more importantly removes some of the signal power that would otherwise be available at the output node for further transmission. Another disadvantage of this arrangement is that the inclusion of the splitter or for that matter any other similar tap, itself induces some loss by virtue of it disturbing the beam of light propagating within the optical fibre.

U.S. Patent No. 5,497,264 in the name of Bayart et al. discloses a regulated optical amplifier.

U.S. Patent No. 5,521,752 in the name of Heidermann et al. describes an optical amplifying circuit which monitors the input light in order to turn off the system in which it is contained, or individual components of the system eg. the optical fibre amplifier itself when t the input light is lacking. The '752 patent attempts to provide a circuit that will reduce the loss associated with monitoring a pump signal by providing a tap which is disposed in an un-doped region of the fibre such that it attempts to tap photons or energy related to the pump beam that were not absorbed by optical signal to be amplified within a rare earth doped section of optical fibre. Although this circuit appears to perform its intended function it is a costly circuit to implement and is not entirely efficient.

Fused tapered couplers are now in widespread use in the field of rare-earth doped optical amplifiers. They are used for coupling a pump signal to a transmission signal to be amplified. One early disclosure of an optical fibre coupler is found in U.S. Patent No. 4,763,977 in the name of Kawasaki et al incorporated herein by reference. In this patent disclosure is made relating to obtaining a predetermined coupling ratio. A pair of virtually identical fibres are fused together at a narrowed waist region, each fibre being formed of a core and a cladding, each being tapered toward the waist in such a manner as to ensure adiabatic propagation of light in the structure.

In optical amplifier applications, this 4-port device described by Kawasaki, and later described by Weidman in U.S. Patent No. 5,295,211 (incorporated herein by reference) for use as a "fiber amplifier coupler" is now commonly in use as a three-port coupler, wherein the fourth port is typically unused.

These couplers, for example having 4-ports wherein only 3-ports are used, are designed to couple as efficiently as possible the transmission signal light launched into port 1 and the pump signal light launched into port 2 together to be output from port 3 of the device. Although it has been preferable to have no light leaking out of port 4, in practice, this is not the case. At least some small fraction of the light launched into the coupler does leak out of the fourth port.

Since the amount of the light present at the fourth port is proportional to the intensity of the input light launched into ports 1 and 2, monitoring the light on the fourth port provides an indication of the light energy input into ports 1 and 2.

Heretofore, as is described in the various United States patents noted above, schemes to tap light and the provision of a tap separate from the coupler used to inject and combine a pump signal with a transmission signal to be amplified has been common practice. This invention obviates this practice.

In accordance with the invention, there is provided, an optical amplifier for amplifying an optical signal, comprising:
a pump light source for generating a pump signal for providing pump signal energy to an input signal in a rare earth doped optical waveguide;
a four-port coupler having first, second, third and fourth ports, the first port for receiving the input signal to be amplified, the second port optically coupled to the first port for receiving and passing input signal to be amplified and the pump signal to a section of optical waveguide, doped with a rare-earth element and having a first end and a second end, the first end thereof coupled to said second port of the four-port coupler, the third port coupled with the pump light source, for providing most of the pump signal energy to the section of optical waveguide, the fourth port for providing a monitoring tap and being optically coupled to a detector for providing a feedback signal to control the intensity of pump light source.

In accordance with the invention, there is further provided, an optical amplifier for amplifying an optical signal, comprising:
a) a section of optical fibre for amplifying an optical signal propagating therein in the presence of additional optical energy;
b) a pump light source for generating a pump signal for providing pump signal energy to the optical fibre;
c) a WDM coupler having
   i) an input port optically coupled to the pump light source for receiving the pump signal;
   ii) an input port for receiving the input signal to be amplified;
   iii) an output port for receiving and carrying both the pump light signal and the input signal to be amplified, the output port being optically coupled to the section of optical fibre; and,
   iv) a fourth port for providing a monitoring tap and being optically coupled to a detector for providing a feedback signal; and
d) a control signal for receiving the feedback signal and for controlling a current or voltage provided to the pump light source.
It is an object of this invention to provide an amplifier having a cost-efficient tap for monitoring at least one of a pump and an amplified signal.

In accordance with another aspect of the invention, there is provided, a method of controlling an optical amplifier comprising the steps of:
providing coupler having at least four ports;
providing an input signal to be amplified to a first port of the coupler;
providing a pump signal to be combined with the signal to be amplified to a second port of the coupler;
multiplexing input signal to be amplified and the pump signal on a third port of the coupler;
receiving a portion of one or both of the signal to be amplified and the pump signal on a fourth port of the coupler; and,
detecting information relating to the intensity of light present at the fourth port for controlling an aspect of the amplifier's operation.

Although this invention is particularly suited to systems which employ rare-earth doped amplifiers, the invention should not be limited thereto. For example, a coupler having four ports, one of the ports being a tap, another of the ports being a pump input port can also be used in a Raman amplifying system.

### Brief Description of the Drawings

Exemplary embodiments of the invention will now be described in conjunction with the drawings in which:
FIG. 1 is a schematic block diagram of a prior art optical amplifier;
FIG. 2 is a schematic block diagram of an improvement over the circuit of FIG. 1 as shown in U.S. Patent No. 5,374,973.
Fig. 3 is a schematic block diagram of a prior art optical pumping circuit for providing 980 nm light, including an optical tap for tapping some of the pump signal at an output end thereof;
Fig. 4 is a schematic block diagram of an amplifier including the pump circuit shown in Fig. 3;
Fig. 5 is a graph depicting both ideal and measured responses of input current IpD versus power out Po for the pump circuit; and,
Fig. 6 is a schematic block circuit diagram of an alternative embodiment of the invention that provides some measure of circuit protection by determining whether an input signal is present.

### Detailed Description

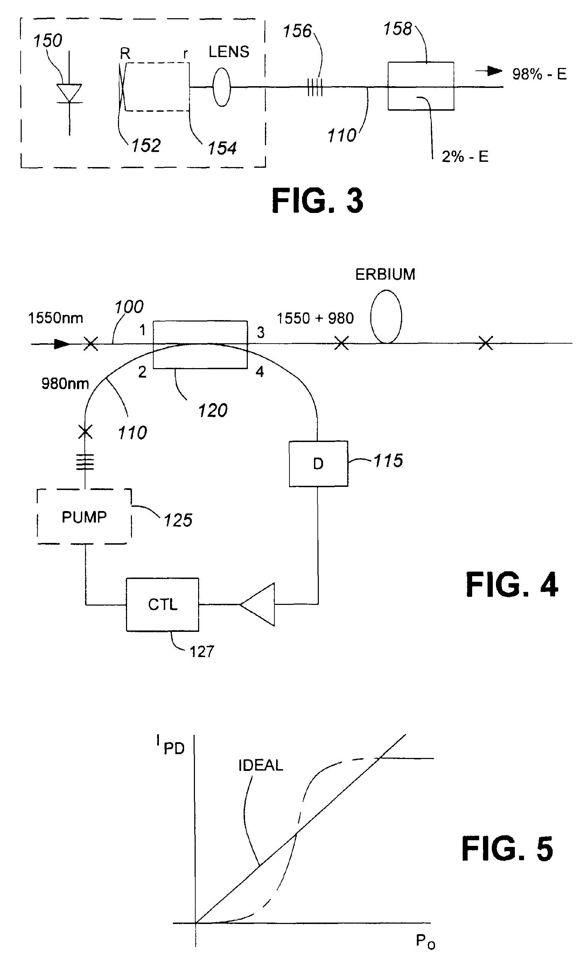

Turning now to Fig. 3, an optical amplifier pump circuit is shown, having a photo-diode 150 optically coupled to provide light to a three-reflector laser cavity comprising a highly reflective rear-most mirror 152, a less reflective intermediate mirror 154 spaced a predetermined lasing distance from the mirror 152 and a moderately reflective in-line fibre Bragg grating 156 within optical fibre 110 providing a third mirror to a predetermined wavelength λₚᵤₘₚ. In a stabilized pump circuit as shown, one known method of monitoring the pump power is by providing a monitor at the rear-most end, to attempt to determine pump power provided to an erbium-doped fibre by monitoring the current provided by the photo-diode 150. Although this monitoring solution is possible, it is not a preferred or reliable solution. It is found that by monitoring the photo-diode current the output light does not in all instances correspond in a linear manner to increases or decreases in photo-diode current Ip_{D} ; stated differently, the amount of light that is coupled into the output fibre 110 fibre is different than the amount of light that is incident upon the back facet reflector 152. This difference is referred to as the front to back tracking ratio which is not 1:1. Fig. 5 shows an ideal straight light when plotting Ipd versus Po wherein the dashed line shows the actual correspondence, which is not linear. This anomaly or non-linear behavior is a result of beam movement when drive current Ip_{D} changes; different longitudinal modes become supported in the cavity. In a three-reflector cavity this erroneous behavior becomes exacerbated.

One known solution to the lack of reliability of the former method of monitoring the photo-diode current is to provide a separate monitor tap 158 at the output end at or near the erbium-doped amplifying fibre. Notwithstanding, employing this solution as has been done in the prior art has some drawbacks. By providing a tap for extracting only a portion of the pump signal, and serving no other purpose, some coupling losses, or excess losses are experienced on both the tap and the pass through signal. This is exemplified in Fig. 3. In this instance, the tap signal is shown as 2% minus excess coupling loss and the pump signal not being tapped is shown as 98% minus excess coupling loss. Hence, this solution is not preferred.

A more preferred and elegant solution is found by turning to Fig. 4; here an optical amplifier in accordance with this invention is shown having an input optical fibre 100 carrying a communications signal having a wavelength of 1550 nm. Port 1 of a four-port coupler 120 is shown spliced to the input optical fibre 100. The symbol X in this an other figures indicates a splice location. An optical fibre 110 providing a 980 nm pump signal is coupled to port 2 of the four-port coupler 120 in a similar manner, by way of a splice joint. Port 3 of the four-port coupler 120 serves as a multiplexing output port for carrying substantially most (about 98%) of the signal energy within the 1550 nm communications signal along with (about 98% of) the 980 nm pump signal. Of course as the signal energy of the 980 nm pump signal increases or decreases the light (approximately 2%) present at port 4 of the four-port coupler will increase or decrease proportionately. In this manner, by monitoring the light at port 4, an indication of the strength of the signal energy at the output port 3 can be determined.

In Fig. 4 port 4 of the four-port coupler is coupled directly to a detector 115 for detecting the intensity of the light present at port 4. In a preferred embodiment described hereafter, a filter is provided to substantially block any light of wavelength 1550 nm and for allowing any of the pump light of wavelength 980 nm to pass to the detector 115. In this manner the intensity of the pump signal can be monitored without unwanted signal energy affecting the determination of the pump signal intensity. Notwithstanding, if it is desired to monitor the transmission signal, a filter can be provided to block the pump signal and allow a small portion of the communications signal to pass to the detector 115. This latter embodiment may be desired so that the pump 125 can be switched off when there is no communications signal present. Of course in this instance a filter can be provided that will direct any 980 nm light to a first detector while simultaneously directing any 1550 nm light to a second detector. Referring once again to Fig. 4, an electrical output from the detector 115 is amplified by an electrical amplifier and is provided to well known feedback control circuitry 127 for controlling the pump 125.

In the exemplary embodiment described, the pump 127 includes a laser diode, a first strong reflector a second weaker reflector, and a Bragg in-line grating that serves as a second reflector for reflecting a predetermined wavelength λₚᵤₘₚ which is typically 980 nm.

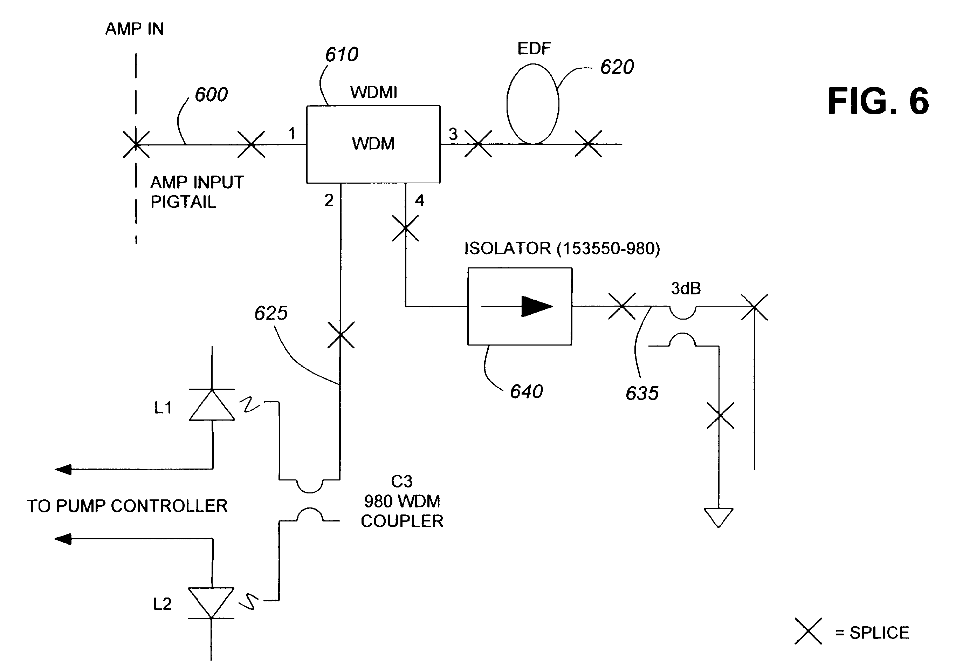

Turning now to Fig. 6 an optical circuit is shown in accordance with an embodiment of this invention wherein an input optical fibre is spliced with an input port of a WDM filter 610 which may be a fused taper coupler. Couplers of this type are typically designed such that no light is coupled out of the fourth port; notwithstanding, about 20dB of the input light input from port 1 and port 2 directed to port 3 leaks out into port 4. Hence, approximately 0.05% of the light leaks into the fourth port and 99.95% of the light is provided to the third output port of the coupler. Ideally the coupler can be designed such that the typically unused fourth port has a controlled percentage of leakage.

The circuit shown if Fig. 6 functions in the following manner. An input signal to be amplified is launched into the input optical fibre 600 which is directly coupled with a first port of a WDM coupler 610. The coupler is not limited to a fused taper coupler, which is in this instance, a preferred embodiment. A pump signal is provided by a pump combiner assembly on optical fibre 625 and is connected to a second port labeled 2 of the WDM coupler 610. An optical amplifying fibre 620, either in the form of a doped, such as an EDF or undoped waveguide in the form of normal transmitting fibre 620 is coupled to a third port of the WDM coupler 610. A fourth port of the coupler 610 is coupled by way of being spliced and preferably fused to an optical fibre 635. An optical isolator which isolates and only passes the transmission signal is provided. The isolator is designed to reject (or extinguish) light of wavelengths about 980 nm, thereby preventing the pump signal from propagating through to optical fibre 635. Monitoring circuitry not shown is coupled to the optical fibre 635 for determining the presence or absence of signal light energy corresponding to the transmission signal. In this embodiment the signal light can be monitored for presence or absence, or for its presence above predetermined threshold intensity. By so doing, the pump can remain un-switched until the input signal is above a certain level. This prevents the amplifier output from spiking, which can destroy components within a system. In yet another embodiment, the intensity of the input signal can be monitored and the pump signal intensity can be controlled in dependence upon the intensity of the input signal.

## Claims

1. An optical amplifier for amplifying an optical signal, comprising:
a pump light source for generating a pump signal for providing pump signal energy to an input signal in a rare earth doped optical waveguide;
a four-port coupler having first, second, third and fourth ports, the first port for receiving the input signal to be amplified, the second port optically coupled to the first port for receiving and passing input signal to be amplified and the pump signal to a section of optical waveguide, doped with a rare-earth element and having a first end and a second end, the first end thereof coupled to said second port of the four-port coupler, the third port coupled with the pump light source, for providing most of the pump signal energy to the section of optical waveguide, the fourth port for providing a monitoring tap and being optically coupled to a detector for providing a feedback signal to control the intensity of pump light source.

2. An optical amplifier as defined in claim 1, wherein the optical waveguide section is an optical fibre.

3. An optical amplifier as defined in claim 2, wherein an optical filter is provided for substantially blocking the a primary wavelength of the input signal from reaching the detector.

4. An optical amplifier as defined in claim 3 wherein the optical filter is designed to pass of the pump signal to the detector while substantially preventing most of the input signal from reaching the detector.

5. An optical amplifier comprising an input optical fibre, an length of erbium doped optical fibre, a pump light source for generating a pump light signal, and a feedback tap for providing an indication of the presence and absence or intensity of the pump light signal to a control circuit for controlling the pump light signal, the amplifier including a four-port coupler having a first port disposed to receive an input signal to be amplified, a second port directly coupled to the first port for receiving the pump light and the input signal, a third port optically coupled to receive light from the pump light source and a fourth port for providing feedback information about at least one of the input signal and the pump signal to the control signal for controlling the signal pump.

6. An optical amplifier for amplifying an optical signal, comprising:
a) a section of optical fibre for amplifying an optical signal propagating therein in the presence of additional optical energy;
b) a pump light source for generating a pump signal for providing pump signal energy to the optical fibre;
c) a WDM coupler having
i) an input port optically coupled to the pump light source for receiving the pump signal;
ii) an input port for receiving the input signal to be amplified;
iii) an output port for receiving and carrying both the pump light signal and the input signal to be amplified, the output port being optically coupled to the section of optical fibre; and,
iv) a fourth port for providing a monitoring tap and being optically coupled to a detector for providing a feedback signal; and
d) a control signal for receiving the feedback signal and for controlling a current or voltage provided to the pump light source.

7. An optical amplifier as defined in claim 6, wherien the section of optical fibre is doped with a rare earth.

8. An optical amplifier as defined in claim 6, wherein the WDM coupler is a fused tapered coupler.

9. An optical amplifier as defined in claim 6, further comprising means for allowing a portion of the pump signal to pass propagate to the detector while substantially preventing any portion of the signal to be amplified to propagate to the detector.

10. An optical amplifier as defined in claim 6, further comprising means for preventing any substantial portion of the pump signal to pass propagate to the detector while substantially allowing a detectable portion of the signal to be amplified to propagate to the detector.

11. An optical amplifier as defined in claim 6 including a filter optically in-line with the fourth port for substantially preventing one of the pump signal and the signal to be amplified from reaching the detector, while allowing the other of the signals to pass to the detector.

12. A method of controlling an optical amplifier comprising the steps of
providing coupler having at least four ports;
providing an input signal to be amplified to a first port of the coupler;
providing a pump signal to be combined with the signal to be amplified to a second port of the coupler;
multiplexing input signal to be amplified and the pump signal on a third port of the coupler;
receiving a portion of one or both of the signal to be amplified and the pump signal on a fourth port of the coupler; and,
detecting information relating to the intensity of light present at the fourth port for controlling an aspect of the amplifier's operation.
